Europäisches Patentamt

European Patent Office

Office européen des brevets

(11) Veröffentlichungsnummer : **0 053 691**
**B1**

(12) **EUROPÄISCHE PATENTSCHRIFT**

(45) Veröffentlichungstag der Patentschrift :
26.09.84

(21) Anmeldenummer : 81108723.8

(22) Anmeldetag : 22.10.81

(51) Int. Cl.³ : **H 01 F 27/26**, H 01 F 37/00,
H 02 M   7/04

(54) Saugdrossel für Hochstromtransformatoren.

(30) Priorität : 10.12.80 DE 3046505

(43) Veröffentlichungstag der Anmeldung :
16.06.82 Patentblatt 82/24

(45) Bekanntmachung des Hinweises auf die Patenterteilung : 26.09.84 Patentblatt 84/39

(84) Benannte Vertragsstaaten :
AT CH LI NL SE

(56) Entgegenhaltungen :
DE-A- 1 488 222
DE-A- 2 839 114
DE-B- 1 199 873
DE-C-   143 271
US-A- 2 918 616
US-A- 3 275 856

(73) Patentinhaber : **TRANSFORMATOREN UNION
AKTIENGESELLSCHAFT**
Deckerstrasse 1
D-7000 Stuttgart 50 (DE)

(72) Erfinder : **Bartl, Karl**
Dr. Wackerstrasse 25
D-8501 Schwanstetten 1 (DE)
Erfinder : **Saemann, Karl**
Hopfweg 13
D-8501 Pyrbaum (DE)

(74) Vertreter : **Mehl, Ernst, Dipl.-Ing. et al**
Postfach 22 01 76
D-8000 München 22 (DE)

## Beschreibung

Die Erfindung betrifft eine Saugdrossel für Hochstromtransformatoren, insbesondere Gleichrichtertransformatoren, mit zwei von einander entgegengesetzten elektrischen Strömen durchflossenen Wicklungen aus Leiterschienen in Fenstern eines aus Teilen zusammengesetzten und an der Trennfuge einen Spalt für den Magnetfluß bildenden lamellierten Eisenkernes als Rahmenkern, der durch Preßplatten aus Isolierstoff und Preßbolzen zusammengehalten ist.

Derartige Saugdrosseln dienen beispielsweise in Gleichrichtertransformatoren zur Erzielung gleichmäßiger und gegenseitig aneinander angeglichenen Strömen in zwei um 180° gegeneinander phasenverschobenen Sekundärwicklungen von Hochstromtransformatoren. Dabei sind die Saugdrosseln üblicherweise zusammen mit dem Aktivteil des Hochstromtransformators in einem gemeinsamen Kessel angeordnet.

Bei bisher handelsüblichen Ausführungen sind die Leiterschienen von Teilen eines Rahmenkerns umfaßt, zwischen denen mindestens ein mit unmagnetischem Werkstoff gefüllter Spalt vorgesehen ist und die durch Preßplatten zusammengehalten sind. Die hierzu erforderliche Preßkraft wird durch an den Kernteilen vorbeigeführte, die Preßplatten aufeinander zu ziehende Preßbolzen erzeugt.

Hierbei sind zur Führung und Halterung der Leiterschienen in den Kernfenstern besondere Maßnahmen erforderlich und die Preßplatten weisen zur Aufnahme der neben dem Kern liegenden Preßbolzen verhältnismäßig große Abmessungen auf, so daß die Saugdrossel nur mit Schwierigkeiten zusammen mit dem Aktivteil des zugehörigen Hochstromtransformators in einem gemeinsamen Kessel unterzubringen ist. Darüber hinaus müssen bei dieser bekannten Anordnung die Preßplatten infolge der von ihnen aufzunehmenden Biegebelastung einen verhältnismäßig großen Querschnitt haben, so daß sich hieraus in Verbindung mit der verhältnismäßig großen Breite der Preßplatten auch ein unerwünscht großes Eigengewicht für die Saugdrossel ergibt.

Der Erfindung liegt nun die Aufgabe zugrunde, für eine Saugdrossel einen Aufbau zu schaffen, der eine Verringerung der Gesamtabmessungen und des Eigengewichts der Saugdrosseln erlaubt und darüber hinaus durch zuverlässige Fixierung der Leiterschienen in den Kernfenstern zu einer Minderung der Geräuscherzeugung beiträgt.

Erfindungsgemäß wird diese Aufgabe bei einer Saugdrossel der eingangs genannten Art dadurch gelöst, daß der Rahmenkern dadurch, daß er quer zur Längsrichtung der Leiterschienen durch Preß- und Kühlkanäle unterbrochen ist, aus teilkernen aufgebaut ist, daß die Preßbolzen die Preßkanäle und die Leiterschienen durchsetzen, daß im Bereich der Preßbolzen zwischen den einzelnen Leiterschienen eingespannte Distanzstücke aus Isolierwerkstoff die Leiterschienen in den Fenstern des Rahmenkernes führen, daß die Leiterschienen beider Wicklungen und die auf der einen Seite des Spaltes liegenden Teile des Rahmenkernes durch die Preßbolzen auf eine erste Preßplatte gespannt sind und daß über aus den Leiterschienen herausragende Verlängerungen der Preßbolzen die den Eisenkreis schließenden, auf der anderen Seite des Luftspaltes liegenden Teile des Rahmenkernes über eine zweite Preßplatte auf die mit den Leiterschienen zusammengepreßten Teile des Rahmenkernes gepreßt sind.

Nach vorteilhaften Ausgestaltungen der Erfindung sind die Preßbolzen mindestens teilweise als Gewindespindeln ausgeführt und sind die Einspannkräfte für die Leiterschienen und die Seiten des Rahmenkernes durch Anziehen von Muttern auf dem Gewinde der Preßbolzen erzeugt. Dabei sind die Preßbolzen durch ihrerseits die Leiterschienen und die Seiten des Rahmenkernes führende Rohre aus Isolierwerkstoff geführt und liegen am elektrischen Potential der obersten Leiterschiene.

Eine besonders vorteilhafte Ausgestaltung der Erfindung besteht darin, daß der Rahmenkern aus untereinander gleich großen, jeweils eine Hälfte des Kernfensters umschließenden Wickelkernteilen zusammengesetzt ist.

Der erfindungsgemäße Aufbau einer Saugdrossel ist sehr vorteilhaft, denn er ermöglicht die Einhaltung von sehr kleinen Gesamtabmessungen, weil die Preßplatten einerseits den Rahmenkern seitlich nicht überragen und andererseits auch nur einer vergleichsweise kleinen Biegebelastung ausgesetzt sind. Außerdem ist der zwischen den Leiterschienen und dem Rahmenkern erforderliche Abstand zur Gewährleistung der elektrischen Prüfspannung auch bei kleinstmöglicher Ausführung des Kernfensters leicht einzuhalten, weil keine besonderen zusätzlichen Bauteile zur Pressung der Leiterschienen erforderlich sind.

Anhand einer Zeichnung werden zwei Ausführungsbeispiele der Erfindung näher erläutert.

Figur 1 zeigt den Querschnitt durch eine Saugdrossel mit einem aus Paketen von E- und I-förmigen Blechen zusammengesetzten Rahmenkern und

Figur 2 einen Schnitt entlang der Fuge zwischen den beiden Rahmenkernteilen der Fig. 1.

Figur 3 zeigt den Querschnitt durch eine Saugdrossel mit einem aus Wickelkernteilen zusammengesetzten Rahmenkern.

Einander entsprechende Teile sind in allen Figuren mit den gleichen Bezugszeichen versehen.

Eine Seite eines Rahmenkernes ist aus Teilen 3 aus E-förmig zugeschnittenen Lamellen zusammengesetzt, wobei Deckplatten 17 eine gleichmäßige Pressung der Lamellen gewährleisten. Jedes der durch den E-förmigen Zuschnitt gebildeten Fenster dient zur Aufnahme von je zwei Leiterschienen 1 und 2, die in entgegengesetzter Richtung von den elektrischen Strömen aus zwei um 180° phasenverschobenen Sekundärwicklungen eines Hochstromtransformators beaufschlagt sind.

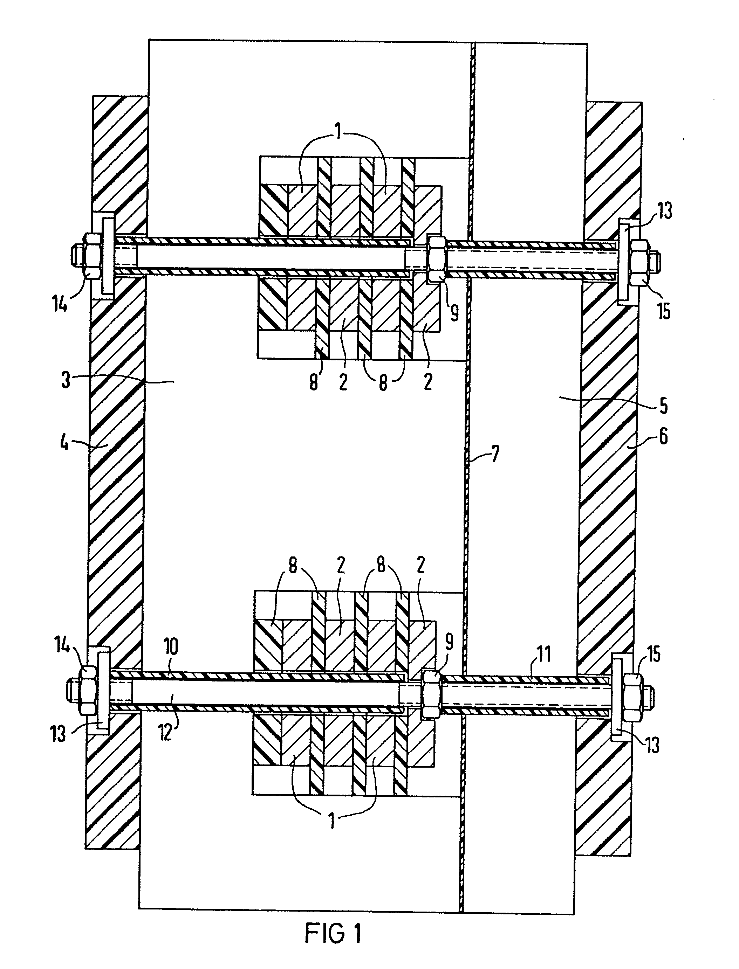

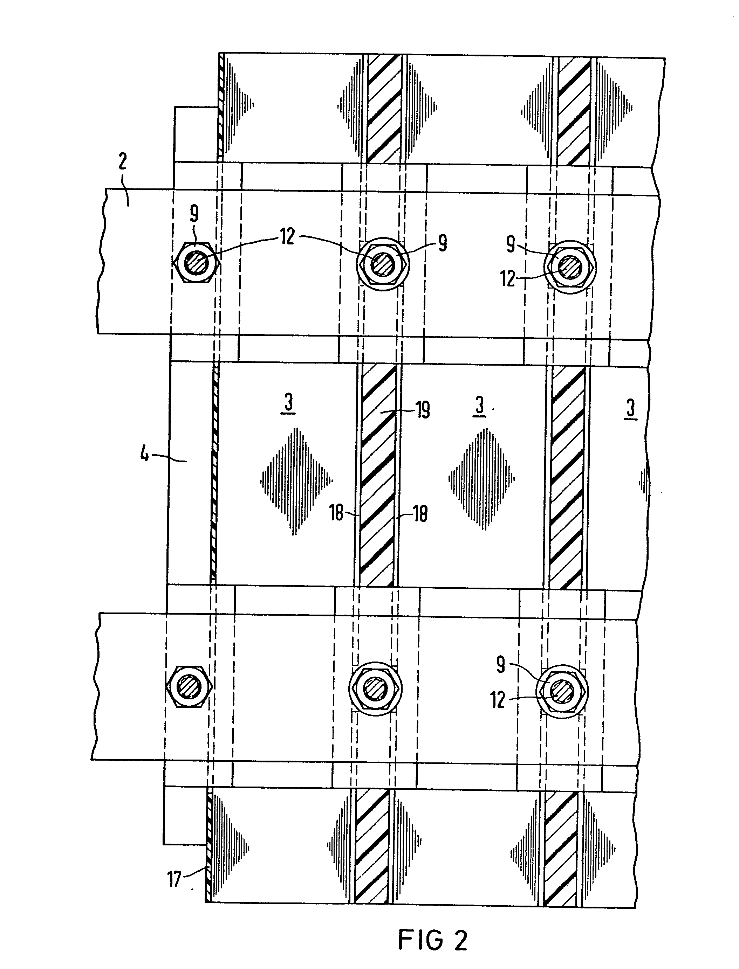

Die Seite des Rahmenkernes aus den Teilen 3 besteht gemäß der Anordnung nach Fig. 1 und 2 aus einer Reihe von, vorzugsweise gleich großen, Blechpaketen, die auf eine über die gesamte Länge der Saugdrossel durchgehende erste Preßplatte 4 aufgesetzt sind, wobei von einander benachbarten Blechpaketen Preß- und Kühlkanäle 18 gebildet sind. Zur Verbindung der Preßplatte 4 mit den Teilen 3 des Rahmenkernes sowie mit den Leiterschienen 1 und 2 dienen Preßbolzen 12, die entsprechende Bohrungen in den Leiterschienen 1 und 2 sowie der preßplatte 4 durchsetzen und im Bereich der Teile 3 des Rahmenkernes jeweils in einem Preß- und Kühlkanal 18 liegen. Die Übertragung der Preßkräfte von den Preßbolzen 12 auf die eingespannten Bauteile erfolgt dabei über Muttern 14 bzw. 9, die auf den beidseitig mit Gewinde versehenen Preßbolzen 12 verstellbar sind. Dabei sind unter den Muttern 14 zur Verringerung der spezifischen Oberflächenbelastung bei der Preßkrafteinleitung in die vorzugsweise aus Hartpapier hergestellte Preßplatte 4 Scheiben 13 vorgesehen.

Zur elektrischen Isolation der Preßbolzen 12 von den Teilen 3 des Rahmenkernes und den Leiterschienen 1 und 2 dienen Rohre 10 aus Isolierwerkstoff, die gleichzeitig auch als Führung für die Leiterschienen 1 und 2 sowie für zwischen diesen angeordnete Distanzstücke 8 aus Isolierwerkstoff dienen. Die Distanzstücke 8 ihrerseits halten die Leiterschienen 1 und 2 in der für diese vorgesehenen Einbaulage innerhalb der Fenster des Eisenkernes.

Die Preßbolzen 12 haben auf der aus den Leiterschienen 1 und 2 herausragenden Seite eine Verlängerung, die zum Halten von Teilen 5 des Rahmenkernes dient. Beim Aufsetzen der Teile 5 des Rahmenkernes auf die Teile 3 wird durch geeignete, nicht dargestellte Zwischenlagen ein von dem Magnetflub zu durchsetzender Spalt 7 geschaffen. Die Teile 5 des Rahmenkernes stellen entsprechend den Teilen 3 ebenfalls einzelne Blechpakete dar, zwischen denen sich die Preß- und Kühlkanäle 18 fortsetzen und die durch eine sich über die gesamte Länge der Saugdrossel erstreckende Preßplatte 6 abgedeckt sind. Auch die Preßkraft zum Aufeinanderdrücken der Teile 3 und 5 des Rahmenkernes wird durch die Preßbolzen 12 aufrechterhalten und durch Anziehen von Muttern 15 in die Preßplatte 6 eingeleitet. Die preßplatte 6 ist ebenfalls vorzugsweise aus Hartpapier hergestellt und durch Scheiben 13 vor unzulässig hoher Flächenpressung durch die Muttern 15 geschützt.

Zur elektrischen Isolation der Preßbolzen 12 von den Teilen 5 des Rahmenkernes dienen Rohre 11 aus Isolierwerkstoff, die gleichzeitig zur Führung der Teile 5 des Rahmenkernes und der Preßplatte 6 dienen. Durch unmittelbare Berührung der metallischen Oberfläche der obersten Leiterschiene 2 jeweils mit den Muttern 9 auf dem Preßbolzen 12 führen diese das elektrische Potential der Leiterschiene 2.

Zum Schutz der Preßplatten 4 und 6 gegen unzulässig hohe Biegebelastungen sind in den Preß- und Kühlkanälen 18 Stützkörper 19 vorgesehen, die zusammen mit den ihnen benachbarten Teilen 3 bzw. 5 des Rahmenkernes Kühlkanäle 18 offen halten.

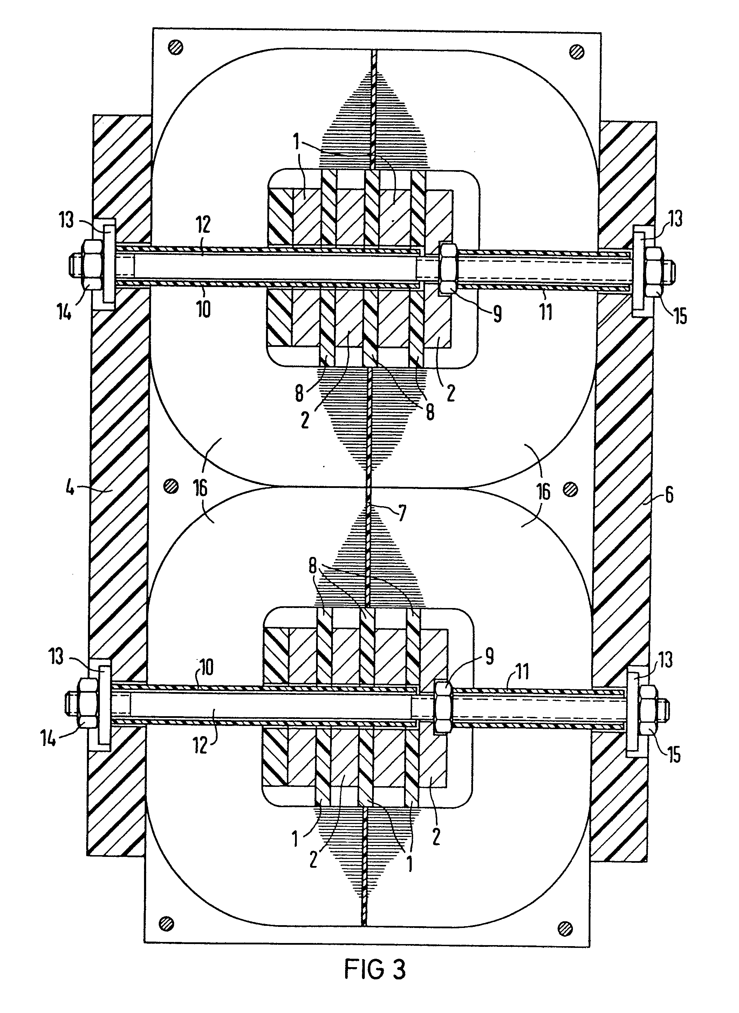

Bei der Ausführung gemäß Fig. 3 sind anstelle der aus Lamellen geschichteten Teile 3 und 5 des Rahmenkernes untereinander gleich große Bandwickelkernteile 16 vorgesehen, die gleichzeitig eine wirtschaftliche Fertigung und eine sehr gute Führung des Magnetflusses gewährleisten.

**Ansprüche**

1. Saugdrossel für Hochstromtransformatoren, insbesondere Gleichrichtertransformatoren, mit zwei von einander entgegengesetzten elektrischen Strömen durchflossenen Wicklungen aus Leiterschienen (1, 2) in Fenstern eines aus Teilen (3, 5) zusammengesetzten und an der Trennfuge einen Spalt (7) für den Magnetfluß bildenden lamellierten Eisenkernes als Rahmenkern, der durch Preßplatten (4, 6) aus Isolierstoff und Preßbolzen (12) zusammengehalten ist, dadurch gekennzeichnet,

— daß der Rahmenkern dadurch, daß er quer zur Längsrichtung der Leiterschienen (1, 2) durch Preß- und Kühlkanäle (18) unterbrochen ist, aus Teilkernen aufgebaut ist,

— daß die Preßbolzen die Preßkanäle (18) und die Leiterschienen (1, 2) durchsetzen,

— daß im Bereich der Preßbolzen (12) zwischen den einzelnen Leiterschienen (1, 2) eingespannte Distanzstücke (8) aus Isolierwerkstoff die Leiterschienen (1, 2) in den Fenstern des Rahmenkernes führen,

— daß die Leiterschienen (1, 2) beider Wicklungen und die auf der einen Seite des Spaltes (7) liegenden Teile (3) des Rahmenkernes durch die Preßbolzen (12) auf eine erste Preßplatte (4) gespannt sind und

— daß über aus den Leiterschienen (1, 2) herausragende Verlängerungen der Preßbolzen (12) die den Eisenkreis schließenden, auf der anderen Seite des Spaltes (7) liegenden Teile (5) des Rahmenkernes über eine zweite Preßplatte (6) auf die mit den Leiterschienen (1, 2) zusammengepreßten Teile (3) des Rahmenkernes gepreßt sind.

2. Saugdrossel nach Anspruch 1, dadurch gekennzeichnet, daß die Preßbolzen (12) mindestens teilweise als Gewindespindeln ausgeführt sind und die Einspannkräfte für die Leiterschienen (1, 2) und die Teile (3, 5) des Rahmenkernes durch Anziehen von Muttern (9, 14, 15) auf dem Gewinde der Preßbolzen (12) erzeugt sind.

3. Saugdrossel nach einem der Ansprüche 1 oder 2, dadurch gekennzeichnet, daß die Preßbolzen (12) durch ihrerseits die Leiterschienen (1, 2) und die Teile (3, 5) des Rahmenkernes führende Rohre (10, 11) aus Isolierwerkstoff geführt sind und am elektrischen Potential der Obersten Leiterschiene (2) liegen.

4. Saugdrossel nach einem der Ansprüche 1 bis 3, dadurch gekennzeichnet, daß die Preßbolzen (12) aus nicht magnetischem Werkstoff bestehen.

5. Saugdrossel nach einem der Ansprüche 1 bis 4, dadurch gekennzeichnet, daß der Rahmenkern aus untereinander gleich großen, jeweils eine Hälfte des Kernfensters umschließenden Wickelkernteilen (16) zusammengesetzt ist (Fig. 3).

6. Saugdrossel nach einem der Ansprüche 1 bis 5, dadurch gekennzeichnet, daß die Preß- und Kühlkanäle (18) mindestens teilweise durch Stützkörper (19) ausgefüllt sind, die zusammen mit den Teilen (3, 5) des Rahmenkernes vertikale Kühlkanäle bilden.

## Claims

1. A choke for high current transformers, in particular rectifier transformers, comprising two windings traversed by opposed electric currents, and consisting of conductive strips (1, 2) in windows in a laminated iron core which is made up of components (3, 5), and forming a gap (7) for the magnetic flux at the joint, and which serves as a frame-type core which is held together by clamping plates (4, 6) made of insulating material and by clamping bolts (12), characterised in that
— the frame-type core is constructed from part-cores, and is interrupted transversely to the longitudinal direction of the conducting strips (1, 2) by clamping and cooling channels (18),
— that the clamping bolts pass through the clamping channels (18) and the conductive strips (1, 2),
— that in the region of the clamping bolts (12), spacing members (8), which are clamped between the individual conductive strips (1, 2) and which consist of insulating material guide the conductive strips (1, 2) in the windows of the frame-type core,
— that the conductive strips (1, 2) of both the windings and the parts (3) of the frame-type core which are arranged on one side of the gap (7), are clamped by the clamping bolts (12) on to a first clamping plate (4), and
— that by means of extensions of the clamping bolts (12), which project from the conductive strips (1, 2), the parts (5) of the frame-type core which complete the magnetic circuit and are located on the other side of the gap (7) are clamped by a second clamping plate (6) on to those parts (3) of the frame-type core which are clamped together with the conducting strips (1, 2).

2. A choke according to Claim 1, characterised in that the clamping bolts (12) consist, at least in part, of threaded shanks and the clamping forces for the conducting strips (1, 2) and the components (3, 5) of the frame-type core are generated by tightening nuts (9, 14, 15) on the thread of the clamping bolts (12).

3. A choke according to one of Claims 1 or 2, characterised in that the clamping bolts (12) are led through tubes (10, 11) made of insulating material, which themselves carry the conductive strips (1, 2) and the components (3, 5) of the frame-type core ; and the clamping bolts are connected to the electric potential of the uppermost conductive strip (2).

4. A choke according to one of Claims 1 to 3, characterised in that the clamping bolts (12) consist of non-magnetic material.

5. A choke according to one of Claims 1 to 4, characterised in that the frame-type core is made of winding core components (16) which are equal in size to one another and each enclose half of the core window (Fig. 3).

6. A choke according to one of Claims 1 to 5, characterised in that the clamping and cooling channels (18) are at least partially filled with support bodies (19) which, together with the components (3, 5) of the frame-type core, form vertical cooling channels.

## Revendications

1. Bobine d'absorption pour transformateurs à courant fort, notamment pour transformateurs de redresseur, comportant deux enroulements parcourus par des courants électriques réciproquement opposés et constitués par des barres conductrices (1, 2) situées dans des fenêtres d'un noyau de fer feuilleté formé par l'assemblage de parties (3, 5) et formant au niveau du joint de séparation une fente (7) pour le flux magnétique et réalisé sous la forme d'un cadre qui est maintenu assemblé par des plaques de serrage (4, 6) constituées en un matériau isolant et par des boulons de serrage (12), caractérisée par le fait que
— le noyau en forme de cadre est constitué par des noyaux partiels du fait qu'il est subdivisé par des canaux de pression et de refroidissement (18), transversalement par rapport à la direction longitudinale des barres conductrices (1, 2),
— que les boulons de serrage traversent les canaux de pression (18) et les barres conductrices (1, 2),
— que, dans la région des boulons de serrage (12), les entretoises (8) constituées en un matériau isolant et enserrées entre les différentes barres conductrices (1, 2) guident les barres conductrices (1, 2) dans les fenêtres du noyau en forme de cadre,
— que les barres conductrices (1, 2) des deux enroulements et les parties (3) du noyau en forme de cadre, qui sont situées d'un côté de la fente (7), sont serrés par les boulons de serrage (12) contre une première plaque de serrage (4), et

— que sur des prolongements des boulons de serrage (12), qui font saillie hors des barres conductrices (1, 2), les parties (5) du noyau en forme de cadre, qui ferment le circuit magnétique et sont situées de l'autre côté de la fente (7), sont serrées par l'intermédiaire d'une seconde plaque de serrage (6) contre les parties (3) du noyau en forme de cadre, qui sont comprimées ainsi que les barres conductrices (1, 2).

2. Bobine d'absorption suivant la revendication 1, caractérisée par le fait que les boulons de serrage (12) sont réalisés au moins partiellement sous la forme de tiges filetées et que les forces de serrage pour les barres conductrices (1, 2) et pour les parties (3, 5) du noyau en forme de cadre sont produites par vissage d'écrous (9, 14, 15) sur le filetage des boulons de serrage (12).

3. Bobine d'absorption suivant l'une des revendications 1 ou 2, caractérisée par le fait que les boulons de serrage (12) s'étendent à travers des tubes (10, 11) en matériau isolant guidant pour leur part les barres conductrices (1, 2) et les parties (3, 5) du noyau en forme de cadre, et sont placés au potentiel électrique de la barre conductrice supérieure (2).

4. Bobine d'absorption suivant l'une des revendications 1 à 3, caractérisée par le fait que les boulons de serrage (12) sont constitués en un matériau non magnétique.

5. Bobine d'absorption selon l'une des revendications 1 à 4, caractérisée par le fait que le noyau en forme de cadre est formé par la réunion de parties (16) de noyau de bobine ; de taille identique, entourant chacune une moitié de la fenêtre du noyau (figure 3).

6. Bobine d'absorption selon l'une des revendications 1 à 5, caractérisée par le fait que les canaux de serrage et de refroidissement (18) sont remplis au moins partiellement par des organes d'appui (19) qui constituent, avec les parties (3, 5) du noyau en forme de cadre, des canaux de refroidissement verticaux.

FIG 1

FIG 2

FIG 3